# EUROPEAN PATENT APPLICATION

(11) **EP 4 657 965 A1**
(43) Date of publication of application: **03.12.2025**
(21) Application number: 24787866.3
(22) Date of filing: 15.03.2024
(51) Int. Cl.: H04W 76/10, G06F 21/16

(54) **DEVICE CONNECTION METHOD, ELECTRONIC DEVICE, AND SYSTEM**

(30) Priority: 14.04.2023 CN 202310444860
(71) Applicant: Huawei Technologies Co., Ltd., Shenzhen, Guangdong 518129 (CN)
(72) Inventor: LENG, Yongqiang, Shenzhen, Guangdong 518129 (CN); LI, Shiming, Shenzhen, Guangdong 518129 (CN); WANG, Shuai, Shenzhen, Guangdong 518129 (CN); DAI, Zhicheng, Shenzhen, Guangdong 518129 (CN)
(74) Representative: Maiwald GmbH
(86) International application number: PCT/CN2024/082004
(87) International publication number: WO 2024/212760

(57) **Abstract**

Embodiments of this application provide a device connection method, an electronic device, and a system. The method may include: When detecting a first operation, a first electronic device may obtain, through a camera, a plurality of frames of images displayed by a second electronic device, determine digital watermark information hidden in the plurality of frames of images, to determine device identification information of the second electronic device based on the digital watermark information, and further establish a connection relationship with the second electronic device. In this technical solution, during device connection, an interaction path of the device connection can be shortened, and a device connection procedure is simplified, so that the device connection is more convenient.

## Description

This application claims priority to Chinese Patent Application No. 202310444860.3, filed with the China National Intellectual Property Administration on April 14, 2023 and entitled "DEVICE CONNECTION METHOD, ELECTRONIC DEVICE, AND SYSTEM", which is incorporated herein by reference in its entirety.

### TECHNICAL FIELD

Embodiments of this application relate to the field of electronic technologies, and more specifically, to a device connection method, an electronic device, and a system.

### BACKGROUND

Currently, a user has an increasing quantity of electronic devices, and a scenario in which electronic devices need to be connected often occurs. When the electronic devices are connected, an interaction path is usually long, and steps are complex.

Although the interaction path can be reduced when an ultra wide band (ultra wide band, UWB) technology is used for connection of the electronic devices, UWB chips need to be deployed on the two electronic devices, increasing costs of the electronic devices.

A digital watermark technology has good hiding performance. The digital watermark technology is applied to establishment of a device connection between the electronic devices. When an electronic device A superimposes device identification information on a displayed image in a digital watermark manner, and another electronic device B captures, through a camera, the displayed image on the electronic device A to identify the electronic device A, a digital watermark in the displayed image on the electronic device A is difficult to be identified due to moire generated in a capturing process.

### SUMMARY

Embodiments of this application provide a device connection method, an electronic device, and a system. In this technical solution, during device connection, after performing an operation of triggering establishment of the device connection, a user only needs to use a camera of a first electronic device to scan an image displayed by a second electronic device, and identify device identification information in the image, thereby completing the connection between the two devices. In this way, an interaction path of the device connection can be shortened, and a device connection procedure is simplified, so that the device connection is more convenient.

According to a first aspect, a system is provided. The system includes a first electronic device and a second electronic device. The second electronic device is configured to hide and superimpose, on a plurality of frames of images displayed by the second electronic device, digital watermark information including device identification information of the second electronic device; the first electronic device is configured to: when detecting a first operation, obtain the plurality of frames of images through a camera; the first electronic device is configured to determine the digital watermark information hidden in the plurality of frames of images; the first electronic device is configured to determine the device identification information of the second electronic device based on the digital watermark information; and the first electronic device is configured to establish a connection relationship with the second electronic device based on the device identification information.

Based on the system provided in this embodiment of this application, a user may scan, through the camera of the first electronic device, the image displayed by the second electronic device, and identify the digital watermark information including the device identification information in the image, to complete the connection between the first electronic device and the second electronic device, so that an interaction path of the device connection can be shortened, and a device connection procedure is simplified, so that the device connection is more convenient.

With reference to the first aspect, in an implementation of the first aspect, the first electronic device is specifically configured to: determine key areas of the plurality of frames of images, where the key area is an area that is of the plurality of frames of images and whose texture complexity is greater than a first preset value; and perform a decoding operation on the key areas of the plurality of frames of images, to obtain the digital watermark information.

Based on this embodiment of this application, the first electronic device determines the device identification information of the second electronic device by determining a partial area of the image, so that processing does not need to be performed on the entire image, and power consumption of the first electronic device can be reduced.

With reference to the first aspect, in an implementation of the first aspect, the first electronic device is specifically configured to: perform a decoding operation on two adjacent frames of images in the plurality of frames of images; and superimpose operation results of a plurality of two adjacent frames of images, to obtain the digital watermark information.

Based on this embodiment of this application, the first electronic device may superimpose the operation results of the plurality of two adjacent frames of images, so that the finally obtained digital watermark information is clearer, and a possibility that the first electronic device accurately identifies the digital watermark information is increased.

With reference to the first aspect, in an implementation of the first aspect, the digital watermark information is superimposed on each of the plurality of frames of images, a ratio of a size of the digital watermark information to a size of the image is greater than a second preset value, and the first electronic device is specifically configured to: perform a decoding operation on entire images of the plurality of frames of images, to obtain the digital watermark information.

For example, the second preset value may be 1, or 0.9.

Based on this embodiment of this application, the size of the digital watermark information is large, so that the user can obtain the digital watermark information through the camera of the first electronic device at a location farther from the second electronic device. In this way, the first electronic device may perform device connection at a location far away from the second electronic device.

According to a second aspect, a device connection method is provided. The method is applied to a first electronic device, and includes: detecting a first operation, and obtaining, through a camera, a plurality of frames of images displayed by a second electronic device, where digital watermark information is hidden in the plurality of frames of images, and the digital watermark information includes device identification information of the second electronic device; determining the digital watermark information hidden in the plurality of frames of images; determining the device identification information of the second electronic device based on the digital watermark information; and establishing a connection relationship with the second electronic device based on the device identification information.

Based on this embodiment of this application, when detecting the first operation, the first electronic device may obtain, through the camera, the plurality of frames of images displayed by the second electronic device, determine the digital watermark information in the plurality of frames of images, to determine the device identification information of the second electronic device based on the digital watermark information in the plurality, and further establish the connection relationship with the second electronic device.

In this way, during device connection, after performing the operation of triggering establishment of the device connection, a user only needs to use the camera of the first electronic device to scan the image displayed by the second electronic device, and identify the device identification information in the image, thereby completing the connection between the two devices. In this way, an interaction path of the device connection can be shortened, and a device connection procedure is simplified, so that the device connection is more convenient.

With reference to the second aspect, in an implementation of the second aspect, determining the digital watermark information hidden in the plurality of frames of images includes: determining key areas of the plurality of frames of images, where the key area is an area that is of the plurality of frames of images and whose texture complexity is greater than a first preset value; and determining the digital watermark information based on the key areas of the plurality of frames of images.

Based on this embodiment of this application, the first electronic device may determine the digital watermark information of the second electronic device by determining the key areas of the plurality of frames of images, to determine the device identification information of the second electronic device.

In this way, the first electronic device determines the device identification information of the second electronic device by determining a partial area of the image, so that processing does not need to be performed on the entire image, and power consumption of the first electronic device can be reduced.

In some other embodiments, the first electronic device may alternatively determine the digital watermark information of the second electronic device based on entire images of the plurality of frames of images or fixed areas of the plurality of frames of images.

With reference to the second aspect, in an implementation of the second aspect, determining the digital watermark information based on the key areas of the plurality of frames of images includes: performing a decoding operation on the key areas of the plurality of frames of images, to obtain the digital watermark information.

For example, the digital watermark information may be a bar code, for example, a two-dimensional bar code or a one-dimensional bar code, or the digital watermark information may be a website address, or a digital number.

Based on this embodiment of this application, the digital watermark information is superimposed on the key area of the image. The first electronic device may perform a decoding operation on the key areas of the plurality of frames of images to obtain the digital watermark information, and further obtain the device identification information of the second electronic device based on the digital watermark information.

In this way, the digital watermark information of the second electronic device is superimposed on the key area of the displayed image, so that the digital watermark information may be invisible or basically invisible to the user. This improves invisibility of the digital watermark information, and the second electronic device can normally display the image that needs to be displayed, so that normal use of the second electronic device by the user is not affected.

With reference to the first aspect, in an implementation of the first aspect, performing the decoding operation on the key areas of the plurality of frames of images, to obtain the digital watermark information includes: performing a decoding operation on key areas of two adjacent frames of images in the plurality of frames of images, to obtain the digital watermark information.

Based on this embodiment of this application, the first electronic device may perform a decoding operation on the key areas of the two adjacent frames of images in the plurality of frames of images, to obtain the digital watermark information. In this technical solution, the first electronic device may obtain the digital watermark information by processing key areas of any two adjacent frames of images, so that the technical solution can be easily implemented.

With reference to the first aspect, in an implementation of the first aspect, performing the decoding operation on the key areas of the plurality of frames of images, to obtain the digital watermark information includes: performing a decoding operation on key areas of two adjacent frames of images in the plurality of frames of images; and superimposing operation results of the key areas of a plurality of two adjacent frames of images, to obtain the digital watermark information.

Based on this embodiment of this application, the first electronic device may superimpose the operation results of the key areas of the plurality of two adjacent frames of images, so that the finally obtained digital watermark information is clearer, and a possibility that the first electronic device accurately identifies the digital watermark information is increased.

With reference to the first aspect, in an implementation of the first aspect, the digital watermark information is superimposed on each of the plurality of frames of images, a ratio of a size of the digital watermark information to a size of the image is greater than a second preset value, and determining the digital watermark information hidden in the plurality of frames of images includes: performing a decoding operation on entire images of the plurality of frames of images, to obtain the digital watermark information.

Based on this embodiment of this application, the ratio of the size of the digital watermark information to the size of the image is greater than the second preset value, and the digital watermark information is superimposed on each frame of image, so that the size of the digital watermark information is large, and the user can obtain the digital watermark information through the camera of the first electronic device at a location farther from the second electronic device. In this way, the first electronic device may perform device connection at a location far away from the second electronic device.

With reference to the first aspect, in an implementation of the first aspect, performing the decoding operation on the entire images of the plurality of frames of images, to obtain the digital watermark information includes: performing a decoding operation on entire images of two adjacent frames of images in the plurality of frames of images, to obtain the digital watermark information.

Based on this embodiment of this application, the first electronic device may perform a decoding operation on the entire images of the two adjacent frames of images in the plurality of frames of images, to obtain the digital watermark information. In this technical solution, the first electronic device may obtain the digital watermark information by processing any two adjacent frames of images, so that the technical solution can be easily implemented.

With reference to the first aspect, in an implementation of the first aspect, performing the decoding operation on the entire images of the plurality of frames of images, to obtain the digital watermark information includes: performing a decoding operation on entire images of two adjacent frames of images in the plurality of frames of images; and superimposing operation results of entire images of a plurality of two adjacent frames of images, to obtain the digital watermark information.

Based on this embodiment of this application, the first electronic device may superimpose the operation results of the entire images of the plurality of two adjacent frames of images, so that the finally obtained digital watermark information is clearer, and a possibility that the first electronic device accurately identifies the digital watermark information is increased.

With reference to the first aspect, in an implementation of the first aspect, the method further includes: sending first indication information to the second electronic device, where the first indication information indicates the second electronic device to stop superimposing the digital watermark information on the displayed image.

In this embodiment of this application, the first electronic device may further send the first indication information to at least one electronic device, to indicate the electronic device to stop superimposing the digital watermark information on the displayed image. In this technical solution, the electronic device can be prevented from always performing an encoding action, so that power consumption of the electronic device can be reduced.

With reference to the first aspect, in an implementation of the first aspect, the digital watermark information is a bar code.

In some other embodiments, the digital watermark information may alternatively be a website address, a digital number, or the like.

With reference to the first aspect, in an implementation of the first aspect, the device identification information includes at least one of a product serial number of the second electronic device, a MAC address of the second electronic device, or a numeric number mapped to the product serial number.

In some other embodiments, in addition to the foregoing content, the device identification information further includes a model of the second electronic device, configuration information of the second electronic device, a device name, and the like.

According to a third aspect, a device connection method is provided. The method is applied to a second electronic device, and includes: receiving second indication information sent by a first electronic device, where the second indication information indicates the second electronic device to superimpose device identification information on a displayed image; and hiding and superimposing, on the displayed image based on the second indication information, digital watermark information including the device identification information of the second electronic device, where the digital watermark information is used to establish a connection relationship between the first electronic device and the second electronic device.

Based on this embodiment of this application, after receiving the second indication information sent by the first electronic device, the second electronic device may superimpose the digital watermark information including the device identification information of the second electronic device on the displayed image.

In this way, because the image displayed by the second electronic device includes the digital watermark information, and the digital watermark information includes the device identification information of the second electronic device, when the first electronic device needs to establish a device connection, the first electronic device may directly scan a plurality of frames of images displayed by the second electronic device, to obtain device identification information in the plurality of frames of images. This helps implement convenient connection.

With reference to the third aspect, in an implementation of the third aspect, hiding and superimposing, on the displayed image based on the second indication information, the digital watermark information including the device identification information of the second electronic device includes: superimposing the digital watermark information on a key area of the image based on the second indication information, where the key area is an area that is of the image and whose texture complexity is greater than a first preset value.

Based on this embodiment of this application, the second electronic device may hide and superimpose the digital watermark information in the key area of the displayed image based on the second indication information. In this way, the digital watermark information can be invisible or basically invisible. This improves invisibility of the digital watermark information. In this way, the second electronic device can normally display an image that needs to be displayed, so that normal use of the second electronic device by a user is not affected.

With reference to the third aspect, in an implementation of the third aspect, hiding and superimposing, on the displayed image based on the second indication information, the digital watermark information including the device identification information of the second electronic device includes: superimposing the digital watermark information on an entire image of the image based on the second indication information, where a ratio of a size of the digital watermark information to a size of the image is greater than a second preset value.

Based on this embodiment of this application, the second electronic device may superimpose the digital watermark information on the entire image of the displayed image based on the second indication information. In this way, the size of the digital watermark information is large, so that the user can obtain the digital watermark information through the camera of the first electronic device at a location farther from the second electronic device. In this way, the first electronic device may perform device connection at a location far away from the second electronic device.

With reference to the third aspect, in an implementation of the third aspect, the method further includes: receiving first indication information sent by the first electronic device; and stopping, based on the first indication information, hiding and superimposing the digital watermark information on the displayed image.

Based on this embodiment of this application, the second electronic device may further receive the first indication information sent by the first electronic device, and stop superimposing the digital watermark information on the displayed image based on the first indication information. In this technical solution, the second electronic device can be prevented from always performing an encoding action, so that power consumption of the second electronic device can be reduced.

With reference to the third aspect, in an implementation of the third aspect, the digital watermark information is a bar code.

With reference to the third aspect, in an implementation of the third aspect, the device identification information includes at least one of a product serial number of the second electronic device, a MAC address of the second electronic device, or a numeric number mapped to the product serial number.

According to a fourth aspect, an electronic device is provided, including one or more processors, and one or more memories, where the one or more memories store one or more programs, and when the one or more programs are executed by the one or more processors, the device connection method according to the second aspect and any one of the possible implementations of the second aspect is performed.

According to a fifth aspect, an electronic device is provided, including one or more processors, and one or more memories, where the one or more memories store one or more programs, and when the one or more programs are executed by the one or more processors, the device connection method according to the third aspect and any one of the possible implementations of the third aspect is performed.

According to a sixth aspect, a chip is provided, where the chip includes a processor and a communication interface, the communication interface is configured to: receive a signal, and transmit the signal to the processor, and the processor processes the signal, so that the device connection method according to the second aspect and any one of the possible implementations of the second aspect is performed.

According to a seventh aspect, a chip is provided, where the chip includes a processor and a communication interface, the communication interface is configured to: receive a signal, and transmit the signal to the processor, and the processor processes the signal, so that the device connection method according to the third aspect and any one of the possible implementations of the third aspect is performed.

According to an eighth aspect, a readable storage medium is provided, where the readable storage medium stores instructions, and when the instructions are run on a device, the device connection method according to the second aspect and any one of the possible implementations of the second aspect is performed.

According to a ninth aspect, a readable storage medium is provided, where the readable storage medium stores instructions, and when the instructions are run on a device, the device connection method according to the third aspect and any one of the possible implementations of the third aspect is performed.

According to a tenth aspect, a program product is provided, where the program product includes program code, and when the program code is run on an electronic device, the device connection method according to the second aspect and any one of the possible implementations of the second aspect is performed.

According to an eleventh aspect, a program product is provided, where the program product includes program code, and when the program code is run on an electronic device, the device connection method according to the third aspect and any one of the possible implementations of the third aspect is performed.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3 is a diagram of a scenario to which an embodiment of this application is applicable;
FIG. 4 is a diagram of an inter encoding scheme of an image according to an embodiment of this application;
FIG. 5 is a diagram of another inter encoding scheme of an image according to an embodiment of this application;
FIG. 6 is a diagram of another inter encoding scheme of an image according to an embodiment of this application;
FIG. 7 is a diagram of decoding an image according to an embodiment of this application;
FIG. 8 is a diagram of superimposing a plurality of two-dimensional bar codes according to an embodiment of this application;
FIG. 9 is an interaction diagram of a device connection method according to an embodiment of this application; and
FIG. 10 is a block diagram of an electronic device according to an embodiment of this application.

### DESCRIPTION OF EMBODIMENTS

The following describes technical solutions of embodiments in this application with reference to accompanying drawings.

A device connection method in embodiments of this application may be applied to electronic devices such as a smartphone, a display, a smart television, a tablet computer, a notebook computer, a personal computer (personal computer, PC), an ultra-mobile personal computer (ultra-mobile personal computer, UMPC), a netbook, a vehicle-mounted device, a wearable device, a foldable device, and an internet of things (internet of things, IOT) device having a display.

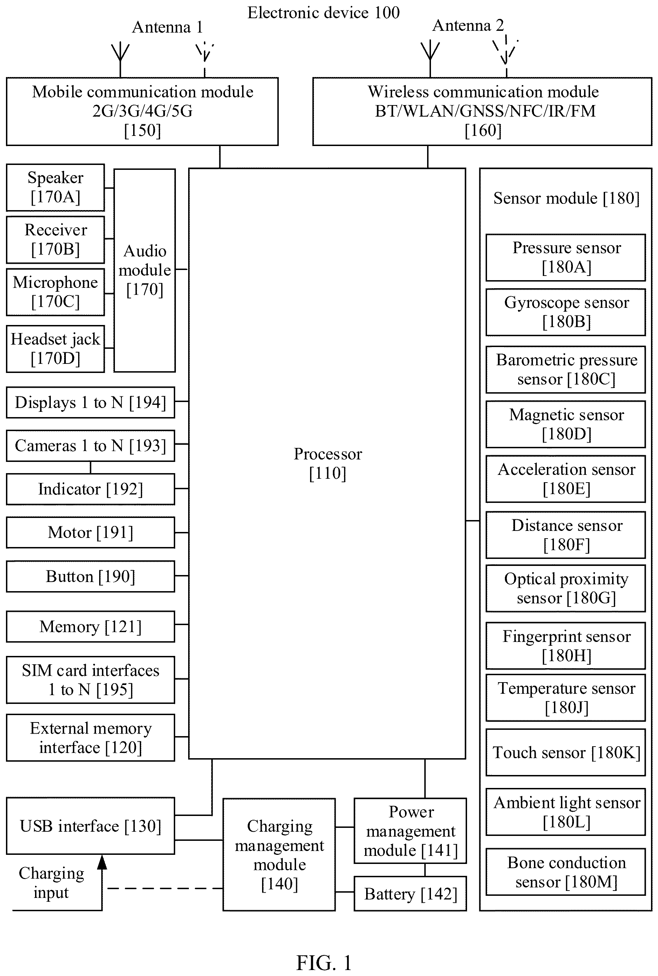

FIG. 1 is a diagram of a structure of an electronic device 100. The electronic device 100 may include a processor 110, an external memory interface 120, a memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

In this application, the processor 110 may be configured to: encode or decode an image. For example, the processor 110 in an electronic device may be configured to superimpose device identification information on a displayed image. The processor in another electronic device may be configured to identify the device identification information from the obtained image.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store the instructions or the data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus interface, and/or the like.

The I2C interface is a two-way synchronization serial bus, and includes a serial data line (serial data line, SDA) and a serial clock line (serial clock line, SCL).

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be configured to: perform audio communication, and sample, quantize, and encode an analog signal. In some embodiments, the audio module 170 may be coupled to the wireless communication module 160 through a PCM bus interface.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160.

The MIPI interface may be configured to connect the processor 110 and a peripheral component like the display 194 or the camera 193.

The GPIO interface may be configured by using software. The GPIO interface may be configured as a control signal or a data signal. In some embodiments, the GPIO interface may be configured to connect the processor 110 and the camera 193, the display 194, the wireless communication module 160, the audio module 170, the sensor module 180, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to perform data transmission between the electronic device 100 and a peripheral device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect the battery 142, the charging management module 140, and the processor 110.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a wireless communication solution that includes 2G/3G/4G/5G or the like and that is applied to the electronic device 100.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, or the receiver 170B), or displays an image or a video on the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), or may be a display made of one of materials such as an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, or a quantum dot light emitting diode (quantum dot light-emitting diode, QLED). In some embodiments, the electronic device 100 may include one or N displays 194, where N is a positive integer greater than 1.

In this embodiment of this application, the electronic device 100 may display, on the display 194, an image, and display an image on which digital watermark information is superimposed.

The electronic device 100 may implement an image capturing function through the ISP, the camera 193, the video codec, the GPU, the display 194, the application processor, and the like.

The ISP is configured to process data fed back by the camera 193. The camera 193 is configured to capture a static image or a video. In this application, the camera 193 may be configured to obtain an image displayed on a display of another electronic device.

The digital signal processor is configured to process a digital signal, and may process another digital signal in addition to the digital image signal.

The video codec is configured to compress or decompress a digital video. The electronic device 100 may support one or more video codecs.

The external memory interface 120 may be configured to connect to an external storage card, for example, a micro SD card, to extend a storage capability of the electronic device 100.

The memory 121 may be configured to store computer-executable program code. The executable program code includes instructions. The processor 110 runs the instructions stored in the memory 121, to perform various function applications of the electronic device 100 and data processing.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal.

The speaker 170A, also referred to as a "loudspeaker", is configured to convert an audio electrical signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a motion posture of the electronic device 100.

The barometric pressure sensor 180C is configured to measure barometric pressure. In some embodiments, the electronic device 100 calculates an altitude through the barometric pressure measured by the barometric pressure sensor 180C, to assist in positioning and navigation.

The acceleration sensor 180E may detect accelerations of the electronic device 100 in various directions (usually on three axes).

The distance sensor 180F is configured to measure a distance.

The fingerprint sensor 180H is configured to collect a fingerprint.

The touch sensor 180K is also referred to as a "touch panel". The touch sensor 180K may be disposed on the display 194, and the touch sensor 180K and the display 194 form a touchscreen, which is also referred to as a "touchscreen".

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse, to receive a blood pressure beating signal.

The button 190 includes a power button, a volume button, and the like.

The motor 191 may generate a vibration prompt.

The indicator 192 may be an indicator light, and may be configured to indicate a charging status and a state of charge change, or may be configured to indicate a message, a missed call, a notification, and the like.

The SIM card interface 195 is configured to connect to a SIM card.

A software system of the electronic device 100 may use a layered architecture, an eventdriven architecture, a microkernel architecture, a micro service architecture, or a cloud architecture. In embodiments of this application, an operating system with a layered architecture is used as an example to describe the software structure of the electronic device 100.

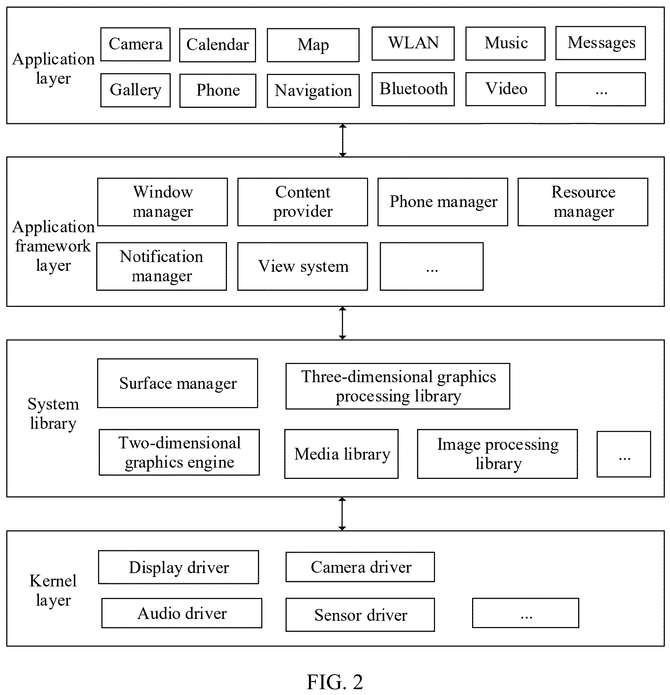

FIG. 2 is a block diagram of a software structure of an electronic device 100 according to an embodiment of this application. In a layered architecture, software is divided into several layers, with each having distinct roles and tasks. The layers communicate with each other through a software interface. In some embodiments, the operating system is divided into four layers: an application layer, an application framework layer, a system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, Messages, and Wallet.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, or the like.

The content provider is configured to: store and obtain data, and enable the data to be accessible to an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message, which may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application that is run on a background, or may be a notification that appears on the screen in a form of dialog window. For example, text information is prompted in the status bar, an alert tone is made, the electronic device vibrates, or the indicator blinks.

The core library includes two parts: One part is a performance function that a java language needs to invoke, and the other part is a core library of Android.

The application layer and the application framework layer run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before the technical solutions of this application are described, some technical terms that may be related in embodiments of this application are first briefly described below.

Digital watermark: A digital watermark is used to embed specific information into a digital signal. The digital signal may be an audio, an image, a video, or the like. Digital watermarks can be classified into two types: an emergent watermark and a hidden watermark. The emergent watermark is a visible watermark, and information contained in the watermark can be seen when an image and a video are viewed. The hidden watermark is added to an audio, an image, or a video as digital data, but cannot be seen normally. The digital watermark in this application may be a hidden digital watermark.

Currently, a user has an increasing quantity of electronic devices, and a scenario in which electronic devices need to be connected often occurs. When the electronic devices are connected, an interaction path is usually long, and steps are complex.

Although the interaction path can be reduced when a UWB technology is used for connection of the electronic devices, UWB chips need to be deployed on the two electronic devices, increasing costs of the electronic devices.

A hidden digital watermark technology has good hiding performance. In a normal case, hidden digital watermark information is added to an image displayed by the electronic device, and the digital watermark information may be obtained by processing the image. However, when a camera of the electronic device is used to capture the image, it is difficult to identify the digital watermark information in the image due to moire generated in a capturing process.

For example, the digital watermark technology is applied to establishment of a connection relationship between the devices. When an electronic device A superimposes device identification information on a displayed image in a digital watermark manner, and another electronic device B captures, through a camera, the displayed image on the electronic device A to identify the digital watermark information, a digital watermark in the displayed image on the electronic device A is difficult to be identified due to moire generated in a capturing process.

In view of this, embodiments of this application provide a device connection method, an electronic device, and a system. In this technical solution, the electronic device A may perform an encoding operation on the digital watermark information including the device identification information, to superimpose the digital watermark information on the displayed image, and the digital watermark information is invisible to the user. The another electronic device B may obtain, through the camera, a plurality of frames of images displayed by the electronic device A, obtain the digital watermark information in the plurality of frames of images through a decoding operation, to obtain the device identification information of the electronic device A, and further establish a connection relationship with the electronic device A.

In this technical solution, when the device connection is performed on the electronic device A and the electronic device B, after performing an operation of triggering establishment of a device connection, the user only needs to use the camera of the electronic device B to scan the image displayed by the electronic device A, and identify the digital watermark information including the device identification information in the image, thereby completing the connection between the electronic device A and the electronic device B. In this way, an interaction path of the device connection can be shortened, and a device connection procedure is simplified, so that the device connection is more convenient.

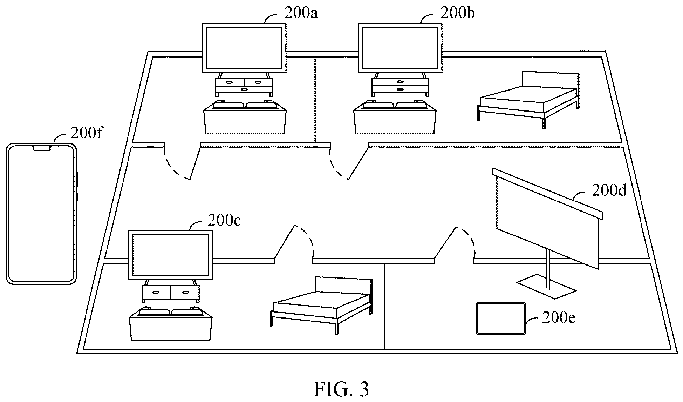

For example, FIG. 3 is a diagram of a scenario to which an embodiment of this application is applicable. As shown in FIG. 3, an example in which a mobile phone 200f establishes a connection relationship with another electronic device is used for description.

As shown in FIG. 3, there may be electronic devices such as a smart television 200a, a smart television 200b, a smart television 200c, a PC 200d, and a tablet computer 200e at home of a user.

When the user expects to connect the mobile phone 200f and the smart television 200c in the plurality of electronic devices at home, the user may use a camera of the mobile phone 200f to scan or capture an image displayed by the smart television 200c, and identify digital watermark information in the image, where the digital watermark information may include device identification information of the smart television 200c. In this way, the mobile phone 200f may establish a connection relationship with the smart television 200c.

In an example, when the mobile phone 200f detects a first operation of triggering device connection, the mobile phone 200f may send indication information to the another electronic device at home. The electronic device that receives the indication information may superimpose digital watermark information including device identification information of the electronic device on a displayed image, and the digital watermark information is invisible to the user. If the user expects the mobile phone 200f to establish a connection relationship with the smart television 200c, the user may use the camera of the mobile phone 200f to scan or capture the image displayed by the smart television 200c, to identify the digital watermark information in the image, and obtain the device identification information of the smart television 200c based on the digital watermark information. Then, the mobile phone 200f may establish a connection relationship with the smart television 200c.

In this way, when the mobile phone 200f is connected to the smart television 200c, after performing the first operation, the user only needs to use the camera of the mobile phone 200f to scan the image displayed on the smart television 200c, thereby completing the connection between the mobile phone 200f and the smart television 200c. According to the technical solution, an interaction path of the device connection can be shortened, and a device connection procedure is simplified, so that the device connection is more convenient. In addition, in this technical solution, no additional hardware needs to be added to the electronic device.

After receiving the indication information, the another electronic device may perform an operation of superimposing the device identification information on the displayed image. If the another electronic device keeps performing the operation subsequently, power consumption of the electronic device is additionally increased. To reduce power consumption of the electronic device, in some optional embodiments, the mobile phone 200f may further send first indication information to the another electronic device. The first indication information may indicate the another electronic device to stop superimposing the device identification information on the displayed image. In this way, after receiving the first indication information, the another electronic device may restore a normally displayed image subsequently, and does not need to continue to superimpose the device identification information on the displayed image. Therefore, power consumption of the electronic device can be reduced to some extent.

In another example, when displaying an image, the another electronic device at home may always hide and superimpose digital watermark information including device identification information of the another electronic device on the displayed image, and the digital watermark information is invisible to the user. When detecting a first operation, the mobile phone 200f may start up the camera; and scans or captures, through the camera, the image displayed on the smart television 200c, and identifies the digital watermark information in the image; and obtains the device identification information of the smart television 200c based on the digital watermark information. Then, the mobile phone 200f may establish a connection relationship with the smart television 200c.

It should be understood that, that the electronic device hides and superimposes the digital watermark on the displayed image may be understood as that the digital watermark information is invisible to the user or is basically invisible to the user. Alternatively, it may be understood that when the user directly views the image by using naked eyes without using another device, the user cannot see or identify the digital watermark information.

For example, the electronic device may superimpose the digital watermark information on a key area of the displayed image, and a texture complexity of the key area is high. Therefore, the digital watermark information may be well hidden in the key area of the image, so that the digital watermark information is invisible to the user.

For another example, when superimposing the digital watermark information on the displayed image, the electronic device may superimpose the digital watermark information on two adjacent frames of images in the image. For example, in a T^{th} frame of image, a luminance value of a pixel of the digital watermark information is increased, and an increased luminance value is less than a threshold. In this case, human eyes cannot distinguish the digital watermark information from the image. In the T^{th} frame of image, the luminance value of the pixel of the digital watermark information is decreased, and a decreased luminance value is the same as the increased luminance value in the T^{th} frame. In this way, the digital watermark information can be better hidden, and is invisible or basically invisible to the user.

In this way, because the image normally displayed by the smart television 200c always includes the device identification information of the smart television 200c, the mobile phone 200f may scan, at any time, the image displayed by the smart television 200c, and the user may use the mobile phone 200f to scan or capture, at any time, the image displayed by the smart television 200c, to perform device connection, so that device connection efficiency and user experience can be improved.

The first operation may be an operation of tapping a scanning sub-function in a camera application; or the first operation may be an operation of sliding from a fixed area of a display of the first electronic device by the user, for example, the first operation is an operation of sliding from a corner of the display by the user at a specific angle; or a control center of a pull-down menu bar of the first electronic device has a shortcut function button, and the first operation may be an operation of tapping the function button by the user.

For example, the device identification information may include one or more of information such as a product serial number of the device, a medium access control (medium access control, MAC) address, model information of the device, a device name, or configuration information of the device. Alternatively, the device identification information may be a mapping of the foregoing information. For example, because the product serial number of the device is usually 15 digits, to reduce encoding overheads, the device identification information may be a mapping of the product serial number of the device. For example, the product serial number of the device is mapped to a 6-digit or 8-digit number.

For example, an example in which the mobile phone 200f establishes a Bluetooth connection to the smart television 200c is used for description. When the device identification information includes the product serial number, the MAC address, or the device name of the device, after obtaining the digital watermark information of the smart television 200c, the mobile phone 200f may obtain the product serial number, the MAC address, or the device name of the smart television 200c from the digital watermark information. In this case, the smart television 200c may broadcast a Bluetooth message, and the Bluetooth message may carry the device identification information of the smart television 200c. In this case, the mobile phone 200f may obtain the Bluetooth message of the smart television 200c through scanning, and determine, based on the obtained device identification information, that a device that needs to be connected is the smart television 200c, so that the mobile phone 200f can perform Bluetooth pairing with the smart television 200c to establish a Bluetooth communication connection.

Alternatively, if the mobile phone 200f and the smart television 200c are in a same local area network or log in to a same Huawei account, when the device identification information is the product serial number or the MAC address of the device, after obtaining the digital watermark information of the smart television 200c, the mobile phone 200f may obtain the product serial number or the MAC address of the smart television 200c from the digital watermark information, so that the mobile phone 200f can establish a connection relationship with the smart television 200c.

Alternatively, if the mobile phone 200f and the smart television 200c are in a same local area network or log in to a same Huawei account, when the device identification information is a digital number mapped to the product serial number of the smart television, after obtaining the digital watermark information of the smart television 200c, the mobile phone 200f may obtain the digital number mapped to the product serial number of the smart television 200c from the digital watermark information, and further determine the smart television 200c based on the digital number, so that the mobile phone 200f can establish a connection relationship with the smart television 200c.

The digital watermark information may be a bar code (for example, a one-dimensional bar code or a two-dimensional bar code), or the digital watermark information may be a website address, a digital number, or the like. A specific form of the digital watermark information is not limited in embodiments of this application.

It should be understood that, after the mobile phone 200f establishes the connection relationship with the smart television 200c, the mobile phone 200f may transmit data to the smart television 200c, or the user may control the smart television 200c through the mobile phone 200f, or the mobile phone 200f may perform projection on the smart television 200c, or the like. This is not limited in embodiments of this application.

A technical solution in which an electronic device superimposes, on a displayed image, digital watermark information including device identification information of the electronic device, and the digital watermark information is invisible to a user may be described below. In embodiments of this application, an example in which the digital watermark information is a two-dimensional bar code is used for description.

Manner 1: The electronic device may superimpose a two-dimensional bar code on a key area of the displayed image, where the key area is an area with a high texture complexity in the image.

Manner 2: The electronic device may superimpose a two-dimensional bar code on the displayed image, where a ratio of a size of the two-dimensional bar code to a size of the image is greater than a threshold.

Manner 3: The electronic device may superimpose a plurality of two-dimensional bar codes on the displayed image in a matrix arrangement manner, where a ratio of a sum of sizes of the plurality of two-dimensional bar codes to a size of the image is greater than a threshold.

Manner 4: The electronic device may superimpose a plurality of two-dimensional bar codes at random locations in the displayed image.

Specifically, in Manner 1, when superimposing the two-dimensional bar code on the key area of the displayed image, the electronic device may first determine the key area.

For example, the electronic device may divide the displayed image into N areas, calculate a texture complexity of image content in each area, select first k areas with high texture complexities as the key area, and superimpose the two-dimensional bar code on the key area of the image.

It may be understood that the electronic device may determine a texture complexity of each area by calculating a color histogram, a local binary pattern (local binary pattern, LBP) texture feature, an edge detection feature, a second moment of a gray-scale histogram of an image, or the like of the area.

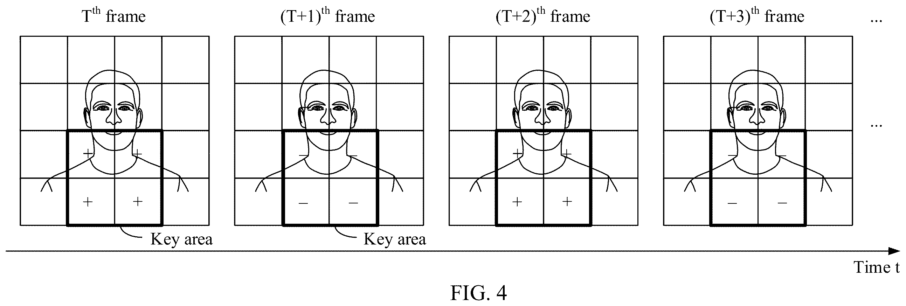

For example, FIG. 4 is a diagram of an inter encoding scheme of an image according to an embodiment of this application.

In a normal case, images are displayed on a display of the electronic device frame by frame. For example, if a refresh frequency of the display of the electronic device is 60 hertz (Hz), 60 frames of images can be displayed on the display per second.

The electronic device may superimpose the two-dimensional bar code on two adjacent frames of images that are displayed. It should be understood that a process in which the electronic device superimposes the two-dimensional bar code on the two adjacent frames of images that are displayed may be referred to as an encoding operation.

As shown in FIG. 4, an area to which a sign "+" is added in the image indicates that a pixel of the two-dimensional bar code in the area is increased in luminance, an area to which a sign "-" is added indicates that the pixel of the two-dimensional bar code in the area is decreased in luminance, and an increased luminance value is the same as a decreased luminance value.

After the electronic device determines the key area of the displayed image, as shown in FIG. 4, for a T^{th} frame of image, the pixel of the two-dimensional bar code may be increased in luminance and an obtained pixel is superimposed on a pixel of a key area of the T^{th} frame of image. For a (T+1)^{th} frame of image, the pixel of the two-dimensional bar code superimposed at the T^{th} frame may be negated (reducing luminance) and an obtained pixel is superimposed on a pixel of a key area of the (T+1)^{th} frame of image. A location of the two-dimensional bar code in the T^{th} frame of image is the same as a location of the two-dimensional bar code in the (T+1)^{th} frame of image. For example, if luminance of the pixel of the two-dimensional bar code in the T^{th} frame of image is changed to 1.1 times of original luminance, luminance of the pixel of the two-dimensional bar code in the (T+1)^{th} frame of image is changed to -1.1 times of the original luminance.

A same operation may be performed on the T^{th} frame of image and a (T+2)^{th} frame of image. A same operation may be performed on the (T+1)^{th} frame of image and a (T+3)^{th} frame of image. The rest may be deduced by analogy.

It can be learned from the foregoing descriptions that, in the image displayed by the electronic device, luminance of the two-dimensional bar code in the key areas of the two adjacent frames of images is opposite, and a two-dimensional bar code that does not include an original image may be obtained by subtracting two consecutive frames of images, so that the device identification information of the electronic device can be further determined.

In this way, after the two-dimensional bar code including the device identification information of the electronic device is superimposed on the image displayed by the electronic device, because the two-dimensional bar code is superimposed on the key area with a high texture complexity, the two-dimensional bar code may be invisible or basically invisible to the user. This improves invisibility of the two-dimensional bar code, and the electronic device can normally display an image that needs to be displayed, so that normal use of the electronic device by the user is not affected.

Optionally, the electronic device may further superimpose a two-dimensional bar code at a fixed location in the displayed image. For example, the two-dimensional bar code is located at a lower left corner or a lower right corner of the image.

In Manner 2, a ratio of a size of a two-dimensional bar code to a size of the displayed image is greater than the threshold, and the electronic device may superimpose the two-dimensional bar code on the displayed image. For example, the threshold may be 1 or 0.9.

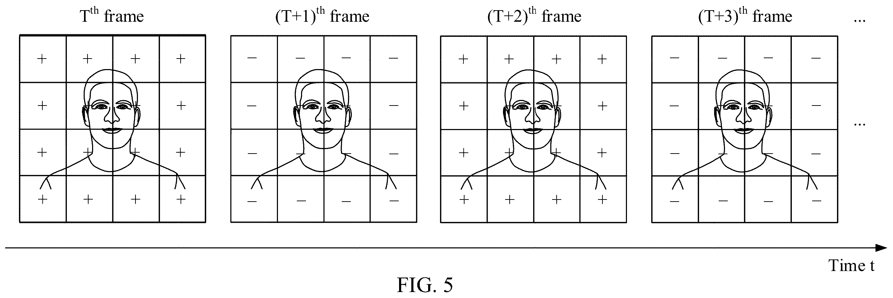

For example, FIG. 5 is a diagram of another inter encoding scheme of an image according to an embodiment of this application.

It should be understood that, for an area to which a symbol "+" is added and an area to which a symbol "-" is added in FIG. 5, refer to the foregoing related descriptions.

For a T^{th} frame of image in FIG. 5, a pixel of the two-dimensional bar code may be increased in luminance and an obtained pixel may be superimposed on a pixel of the T^{th} frame of image. For a (T+1)^{th} frame of image, the pixel of the two-dimensional bar code superimposed at the T^{th} frame may be negated (reducing luminance) and an obtained pixel is superimposed on a pixel of the (T+1)^{th} frame of image. For example, if luminance of the pixel of the two-dimensional bar code in the T^{th} frame of image is changed to 1.2 times of original luminance, luminance of the pixel of the two-dimensional bar code in the (T+1)^{th} frame of image is changed to -1.2 times of the original luminance.

A same operation may be performed on the T^{th} frame of image and a (T+2)^{th} frame of image. A same operation may be performed on the (T+1)^{th} frame of image and a (T+3)^{th} frame of image. The rest may be deduced by analogy.

It can be learned from the foregoing descriptions that, in the image displayed by the electronic device, luminance of a two-dimensional bar code in two adjacent frames of images is opposite, and a two-dimensional bar code that does not include an original image may be obtained by subtracting two consecutive frames of images, so that the device identification information of the electronic device can be further determined.

In this way, the size of the two-dimensional bar code is large, so that the user can obtain the two-dimensional bar code through a camera of another electronic device at a location farther from the electronic device. In this way, the two electronic devices can also establish a connection relationship at locations farther from each other.

Optionally, a length of the two-dimensional bar code may be the same as a length of the image displayed by the electronic device, or a width of the two-dimensional bar code may be the same as a width of the image displayed by the electronic device. This is not limited in embodiments of this application.

In Manner 3, the electronic device may superimpose the plurality of two-dimensional bar codes on the displayed image in a matrix arrangement manner, where the ratio of the sum of sizes of the plurality of two-dimensional bar codes to the size of the image is greater than the threshold. For example, the threshold may be 1 or 0.9.

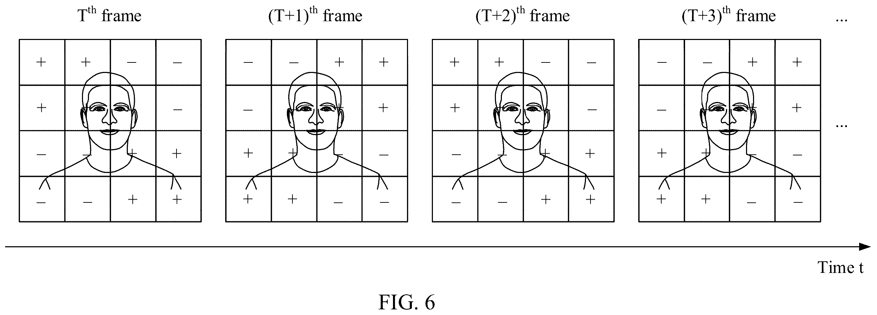

For example, FIG. 6 is a diagram of another inter encoding scheme of an image according to an embodiment of this application.

As shown in FIG. 6, the electronic device may superimpose four two-dimensional bar codes on the displayed image in a 2*2 matrix arrangement manner. A sum of sizes of the four two-dimensional bar codes may be the same as the size of the image displayed by the electronic device.

For a T^{th} frame of image in FIG. 6, pixels of the two-dimensional bar codes may be increased in luminance and obtained pixels are superimposed on pixels of an upper-left area and a lower-right area of the T^{th} frame of image, the pixels of the two-dimensional bar codes that are superimposed in the pixels of the upper-left corner area and the lower-right corner area of the T^{th} frame may be negated (reducing luminance) and obtained pixels are superimposed on pixels of a lower-left corner area and an upper-right corner area of the T^{th} frame of image. For a (T+1)^{th} frame of image, pixels of the four two-dimensional bar codes superimposed on the T^{th} frame of image may be negated, and obtained pixels are superimposed on pixels at corresponding locations in the (T+1)^{th} frame of image.

A same operation may be performed on the T^{th} frame of image and a (T+2)^{th} frame of image. A same operation may be performed on the (T+1)^{th} frame of image and a (T+3)^{th} frame of image. The rest may be deduced by analogy.

It can be learned from the foregoing descriptions that, in the image displayed by the electronic device, luminance of a two-dimensional bar code in two adjacent frames of images is opposite, and a two-dimensional bar code that does not include an original image may be obtained by subtracting two consecutive frames of images, so that the device identification information of the electronic device can be further determined.

In this way, because the plurality of two-dimensional bar codes may be superimposed on the image displayed by the electronic device, another electronic device can more easily obtain the two-dimensional bar code based on the image. This improves a device connection speed.

In Manner 4, the electronic device may superimpose the plurality of two-dimensional bar codes at random locations in the displayed image.

For example, for a T^{th} frame of image, the electronic device may increase luminance of pixels of three two-dimensional bar codes and superimpose obtained pixels on pixels in random areas of the T^{th} frame of image. For a (T+1)^{th} frame of image, the electronic device may perform negation on the luminance of the three two-dimensional bar codes superimposed on a pixel of the T^{th} frame of image, and superimpose obtained pixels at corresponding locations of the (T+1)^{th} frame of image. A same operation may be performed on the T^{th} frame of image and a (T+2)^{th} frame of image. A same operation may be performed on the (T+1)^{th} frame of image and a (T+3)^{th} frame of image. The rest may be deduced by analogy.

Optionally, in Manner 1 to Manner 4, several frames of images may be further included between the T^{th} frame of image and the (T+1)^{th} frame of image; or several frames of images may be further included between the (T+1)^{th} frame of image and the (T+2)^{th} frame of image; or several frames of images may be further included between the (T+2)^{th} frame of image and the (T+3)^{th} frame of image. This is not limited in embodiments of this application. In this case, encoding overheads of the electronic device can be reduced, and power consumption of the electronic device can be reduced.

A decoding process of the another electronic device is described by using an example in which the electronic device superimposes the plurality of two-dimensional bar codes on the displayed image in Manner 3.

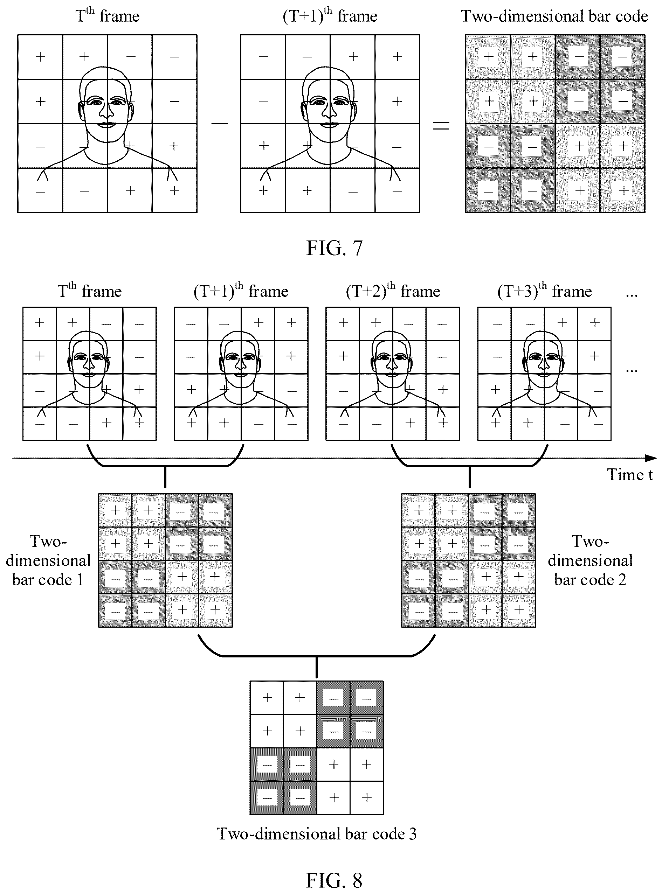

FIG. 7 is a diagram of decoding an image according to an embodiment of this application. The another electronic device may obtain, by subtracting the (T+1)^{th} frame of image from the T^{th} frame of image, the two-dimensional bar code that does not include the image, so that the corresponding device identification information can be determined, and the corresponding electronic device can be further determined. It should be understood that the another electronic device may include a decoding module that can perform the foregoing operation.

In some cases, if the obtained two-dimensional bar code is weak after the electronic device performs the decoding operation on the T^{th} frame of image and the (T+1) ^{th} frame of image that are adjacent to each other in the obtained image, the two-dimensional bar code may not be identified. In this case, the electronic device may perform the operation on every two frames of images in the plurality of obtained frames of images in the foregoing decoding operation manner, to superimpose a plurality of same two-dimensional bar codes, so as to increase a possibility that the electronic device accurately identifies the two-dimensional bar code. This technical solution is described below with reference to FIG. 7.

For example, FIG. 8 is a diagram of superimposing a plurality of two-dimensional bar codes according to an embodiment of this application. As shown in FIG. 8, the electronic device may obtain a two-dimensional bar code 1 by subtracting the (T+1)^{th} frame of image from the T^{th} frame of image, the electronic device may obtain a two-dimensional bar code 2 by subtracting the (T+3)^{th} frame of image from the (T+2)^{th} frame of image, and the electronic device may obtain a two-dimensional bar code 3 by superimposing the two-dimensional bar code 1 and the two-dimensional bar code 2. In this case, two two-dimensional bar codes are superimposed to obtain the two-dimensional bar code 3, so that a possibility that the electronic device accurately identifies the two-dimensional bar code 3 can be increased.

It may be understood that the electronic device may further superimpose more two-dimensional bar codes in the foregoing manner. This is not limited in embodiments of this application.

In the foregoing embodiment, an example in which digital watermark information is a two-dimensional bar code and device identification information is carried in the two-dimensional bar code is used for description. However, this should not constitute any limitation on this application. In some other embodiments, the device identification information may alternatively be carried in a one-dimensional bar code or a link. In some other embodiments, the two-dimensional bar code may further include other information of a device, for example, a device introduction and a purchase link.

In some other embodiments, the two-dimensional bar code may alternatively be used as a normal two-dimensional bar code, and is not only used for device connection. For example, the two-dimensional bar code may include a commodity link. After the user uses the electronic device to scan an image including the two-dimensional bar code, the electronic device may jump to a reserved purchase or purchase details page of the commodity.

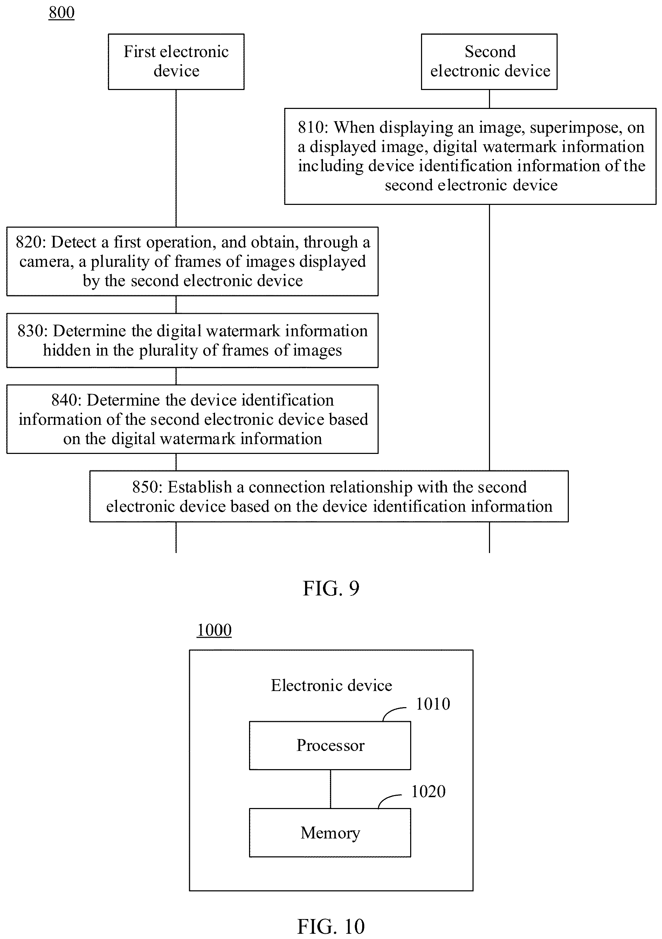

FIG. 9 is an interaction diagram of a device connection method according to an embodiment of this application. As shown in FIG. 9, the method 800 may be applied to an electronic device, and the method 800 may include step 810 to step 850.

810: When displaying an image, a second electronic device hides and superimposes, on the displayed image, digital watermark information including device identification information of the second electronic device.

In some implementations, the second electronic device may superimpose the digital watermark information on a key area of the image, where the key area is an area that is of the image and whose texture complexity is greater than a first preset value. In this technical solution, the digital watermark information can be invisible or basically invisible. This improves invisibility of the digital watermark information. In this way, the second electronic device can normally display an image that needs to be displayed, so that normal use of the second electronic device by a user is not affected.

For a technical solution in which the second electronic device determines the key area, refer to the foregoing related descriptions.

In some implementations, if a ratio of a size of the digital watermark information to a size of the image is greater than a second preset value, the second electronic device may superimpose the digital watermark information on the entire image. For example, the second preset value may be 0.7, 0.9, or 1. In this way, the size of the digital watermark information is large, so that the user can obtain the digital watermark information through a camera of a first electronic device at a location farther from the second electronic device. In this way, the first electronic device may perform device connection at a location far away from the second electronic device.

In another possible implementation, the second electronic device may further superimpose the digital watermark information at a fixed location of the image. For example, the fixed location may be a lower left corner or a lower right corner.

In another possible implementation, the second electronic device may further superimpose a plurality of pieces of same digital watermark information on the image in a matrix arrangement form.

In another possible implementation, the second electronic device may further superimpose one piece of digital watermark information at a random location of the image.

820: The first electronic device detects a first operation, and obtains, through the camera, a plurality of frames of images displayed by the second electronic device.

Optionally, the first electronic device and the second electronic device may be in a same local area network, or the first electronic device and the second electronic device may log in to a same account (for example, a Huawei account).

The first operation may be an operation of triggering the first electronic device to perform device connection. For example, the first operation may be an operation of tapping a scanning sub-function in a camera application; or the first operation may be an operation of sliding from a fixed area of the display of the first electronic device by the user, for example, the first operation is an operation of sliding from a corner of the display by the user at a specific angle; or a control center of a pull-down menu bar of the first electronic device has a shortcut function button, and the first operation may be an operation of tapping the function button by the user; or a lock screen of the first electronic device includes a shortcut button, and the first operation may be an operation of tapping the shortcut button by the user.

830: The first electronic device determines the digital watermark information hidden in the plurality of frames of images.

In a possible implementation, the first electronic device may determine key areas of the plurality of frames of images, where the key area is an area that is of the plurality of frames of images and whose texture complexity is greater than the first preset value; and determine the digital watermark information based on the key areas of the plurality of frames of images. In this way, the first electronic device determines the device identification information of the second electronic device by determining a partial area of the image, so that processing does not need to be performed on the entire image, and power consumption of the first electronic device can be reduced.

In a possible implementation, the digital watermark information is superimposed on each of the plurality of frames of images, and a ratio of the size of the digital watermark information to the size of the image is greater than the second preset value. The first electronic device may perform a decoding operation on the entire images of the plurality of frames of images, to obtain the digital watermark information. For example, the second preset value may be 1, 0.9, or 0.8. In this way, the size of the digital watermark information is large, so that the user can obtain the digital watermark information through the camera of the first electronic device at a location farther from the second electronic device. In this way, the first electronic device may perform device connection at a location far away from the second electronic device.

840: The first electronic device determines the device identification information of the second electronic device based on the digital watermark information.

After obtaining the digital watermark information, the first electronic device may decode the digital watermark information, to obtain the device identification information of the second electronic device in the digital watermark information.

850: The first electronic device establishes a connection relationship with the second electronic device based on the device identification information.

The first electronic device may determine the second electronic device based on the obtained device identification information, and further establish the connection relationship with the second electronic device. It should be understood that, for a technical solution in which the first electronic device establishes the connection relationship with the second electronic device, refer to the foregoing related descriptions.

In an embodiment of this application, when detecting the first operation, the first electronic device may obtain, through the camera, the plurality of frames of images displayed by the second electronic device, determine the digital watermark information in the plurality of frames of images, to determine the device identification information of the second electronic device, and further establish the connection relationship with the second electronic device.

In this way, during device connection, after performing the operation of triggering establishment of the device connection, the user only needs to use the camera of the first electronic device to scan the image displayed by the second electronic device, and identify the device identification information in the image, thereby completing the connection between the two devices. In this way, an interaction path of the device connection can be shortened, and a device connection procedure is simplified, so that the device connection is more convenient.

Optionally, the first electronic device may send second indication information to the second electronic device when detecting the first operation. The second indication information may indicate the second electronic device to superimpose the device identification information on the displayed image. In this case, after receiving the second indication information, the second electronic device may hide and superimpose, on the displayed image, the digital watermark information including the device identification information of the second electronic device, and then the first electronic device obtains, through the camera, the plurality of frames of images displayed by the second electronic device, and continues to perform step 830 to step 850.

In this way, after the user performs the first operation, the second electronic device may perform an operation of superimposing the digital watermark information on the displayed image, so that the foregoing operation can be performed when the user has a need, and there is no need to encode the image all the time. In this technical solution, power consumption of the second electronic device can be further reduced while device connection efficiency is improved.

In some embodiments, that the first electronic device determines the digital watermark information hidden in the plurality of frames of images includes:

The first electronic device determines the key areas of the plurality of frames of images, where the key area is an area that is of the plurality of frames of images and whose texture complexity is greater than the first preset value; and
the first electronic device determines the digital watermark information of the second electronic device based on the key areas of the plurality of frames of images.

For example, as shown in FIG. 4, the key areas may be a key area in a T^{th} frame of image and a key area in a (T+1)^{th} frame of image. It should be understood that a manner in which the first electronic device determines the key areas of the plurality of frames of images may be the same as a manner in which the second electronic device determines the key areas.

In an embodiment of this application, the first electronic device may determine the digital watermark information by determining the key areas of the plurality of frames of images, and further determine the device identification information of the second electronic device.

In this way, the first electronic device determines the digital watermark information by determining a partial area of the image, so that processing does not need to be performed on the entire image, and power consumption of the first electronic device can be reduced.

In some other embodiments, when the digital watermark information of the second electronic device is superimposed on the entire image of the image or the fixed area of the image, the first electronic device may further determine the device identification information of the second electronic device based on the entire images of the plurality of frames of images or the fixed areas of the plurality of frames of images. This is not limited in embodiments of this application.

In some embodiments, determining the digital watermark information based on the key areas of the plurality of frames of images includes:

The first electronic device performs a decoding operation on the key areas of the plurality of frames of images, to obtain the digital watermark information.

For example, the digital watermark information may be a bar code, for example, a two-dimensional bar code or a one-dimensional bar code, or the digital watermark information may be a website address, or a digital number.

In an embodiment of this application, the first electronic device may perform a decoding operation on the key areas of the plurality of frames of images, to obtain the digital watermark information, and further obtain the device identification information of the second electronic device based on the digital watermark information.

In this way, the digital watermark information of the second electronic device is superimposed on the key area of the displayed image, so that the digital watermark information may be invisible or basically invisible to the user. This improves invisibility of the digital watermark information, and the second electronic device can normally display the image that needs to be displayed, so that normal use of the second electronic device by the user is not affected.

In some embodiments, performing the decoding operation on the key areas of the plurality of frames of images, to obtain the digital watermark information includes:

The first electronic device performs a decoding operation on key areas of two adjacent frames of images in the plurality of frames of images, to obtain the digital watermark information.

For example, as shown in FIG. 4, the two adjacent frames of images may be the T^{th} frame of image and the (T+1)^{th} frame of image, and the first electronic device may subtract the (T+1)^{th} frame of image from the T^{th} frame of image, to obtain the digital watermark information.

In an embodiment of this application, the first electronic device may perform a decoding operation on the key areas of the two adjacent frames of images in the plurality of frames of images, to obtain the digital watermark information. In this technical solution, the first electronic device may obtain the digital watermark information by processing key areas of any two adjacent frames of images, so that the technical solution can be easily implemented.

In some embodiments, performing the decoding operation on the key areas of the plurality of frames of images, to obtain the digital watermark information includes:

The first electronic device performs a decoding operation on key areas of two adjacent frames of images in the plurality of frames of images; and
the first electronic device superimposes operation results of key areas of a plurality of two adjacent frames of images, to obtain the digital watermark information.

In an embodiment of this application, the first electronic device may superimpose the operation results of the key areas of the plurality of two adjacent frames of images, so that the finally obtained digital watermark information is clearer, and a possibility that the first electronic device accurately identifies the digital watermark information is increased.

In some other embodiments, the first electronic device may further perform a decoding operation on key areas of two frames of images that are in the plurality of frames of images and that are at an interval of several frames of images, to obtain the digital watermark information. In this case, when superimposing the device identification information on the key area of the displayed image, the second electronic device may also perform encoding at the interval of several frames, so that encoding overheads of the second electronic device can be reduced.

In some embodiments, the digital watermark information is superimposed on each of the plurality of frames of images, the ratio of the size of the digital watermark information to the size of the image is greater than the second preset value, and determining the digital watermark information hidden in the plurality of frames of images includes:

The first electronic device performs a decoding operation on the entire images of the plurality of frames of images, to obtain the digital watermark information.

For example, as shown in FIG. 5, the digital watermark information may be a two-dimensional bar code, and the two-dimensional bar code may be superimposed on the entire image. That the two-dimensional bar code is superimposed on the entire image may be understood as that a size of a two-dimensional bar code may be the same as or slightly less than the size of the image.

In an embodiment of this application, the digital watermark information is superimposed on an entire image of each frame of image, so that the size of the digital watermark information is large, and the user can obtain the digital watermark information through the camera of the first electronic device at a location farther from the second electronic device. In this way, the first electronic device may perform device connection at a location far away from the second electronic device.

In some embodiments, performing the decoding operation on the entire images of the plurality of frames of images, to obtain the digital watermark information includes:

The first electronic device performs a decoding operation on entire images of the two adjacent frames of images in the plurality of frames of images, to obtain the digital watermark information.

In an embodiment of this application, the first electronic device may perform a decoding operation on the entire images of the two adjacent frames of images in the plurality of frames of images, to obtain the digital watermark information. In this technical solution, the first electronic device may obtain the digital watermark information by processing any two adjacent frames of images, so that the technical solution can be easily implemented.

In some other embodiments, the first electronic device may further perform a decoding operation on entire images of the two frames of images that are in the plurality of frames of images and that are at the interval of several frames of images, to obtain the digital watermark information. In this case, when superimposing the device identification information on the displayed image, the second electronic device may also perform encoding at the interval of several frames, so that encoding overheads of the second electronic device can be reduced.

In some embodiments, performing the decoding operation on the entire images of the plurality of frames of images, to obtain the digital watermark information includes:

The first electronic device performs a decoding operation on entire images of two adjacent frames of images in the plurality of frames of images; and
the first electronic device superimposes operation results of entire images of a plurality of two adjacent frames of images, to obtain the digital watermark information.

In an embodiment of this application, the first electronic device may superimpose the operation results of the entire images of the plurality of two adjacent frames of images, so that the finally obtained digital watermark information is clearer, and a possibility that the first electronic device accurately identifies the digital watermark information is increased.

In some other embodiments, the first electronic device may further perform a decoding operation on the entire images of the two frames of images that are in the plurality of frames of images and that are at the interval of several frames of images, and superimpose a plurality of operation results, to obtain the digital watermark information. In this case, when superimposing the device identification information on the displayed image, the second electronic device may also perform encoding at the interval of several frames, so that encoding overheads of the second electronic device can be reduced.

In some embodiments, the method 800 may further include:
sending first indication information to the second electronic device, where the first indication information indicates the second electronic device to stop superimposing the digital watermark information on the displayed image.

In this embodiment of this application, the first electronic device may further send the first indication information to the second electronic device, to indicate the second electronic device to stop superimposing the digital watermark information on the displayed image. In this technical solution, the second electronic device can be prevented from always performing an encoding action, so that power consumption of the second electronic device can be reduced.

In some embodiments, the device identification information includes at least one of a product serial number of the second electronic device, a MAC address of the second electronic device, or a numeric number mapped to the product serial number.

In some other embodiments, in addition to the foregoing content, the device identification information may further include a model of the second electronic device, configuration information of the second electronic device, and the like.

FIG. 10 is a block diagram of an electronic device according to an embodiment of this application. As shown in FIG. 10, the electronic device 1000 may include one or more processors 1010, one or more memories 1020. The one or more memories 1020 store one or more programs. When the one or more programs are executed by the one or more processors 1010, the device connection method in any one of the foregoing possible implementations is performed.

In some embodiments, the electronic device 1000 may be the first electronic device, for example, may be a smartphone or a tablet computer.

In some other embodiments, the electronic device 1000 may be the second electronic device, for example, may be a tablet computer, a smart television, a vehicle-mounted device, or a smart home device.

An embodiment of this application further provides a system, including the first electronic device and the second electronic device in the foregoing embodiments.

An embodiment of this application further provides a chip. The chip includes a processor and a communication interface. The communication interface is configured to: receive a signal and transmit the signal to the processor. The processor processes the signal, so that the device connection method in any one of the foregoing possible implementations is performed.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and software. Whether a function is performed by the hardware or hardware driven by software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that, in this embodiment, division into the modules is an example, is merely logical function division, and may be other division during actual implementation.

An embodiment further provides a device connection apparatus, including modules configured to implement the device connection method in the foregoing embodiments.

An embodiment further provides a readable storage medium. The readable storage medium stores instructions. When the instructions are run on an electronic device, the electronic device is enabled to perform the foregoing related method steps to implement the device connection method in the foregoing embodiments.

An embodiment further provides a program product. When the program product runs on an electronic device, the electronic device performs the foregoing related steps, to implement the device connection method in the foregoing embodiments.

In addition, an embodiment of this application further provides an apparatus. The apparatus may be specifically a chip, a component, or a module. The apparatus may include a processor and a memory that are connected. The memory is configured to store executable instructions. When the apparatus runs, the processor may execute the executable instructions stored in the memory, to enable the chip to perform the device connection method in the foregoing method embodiments.

The display apparatus, the electronic device, the readable storage medium, the program product, or the chip provided in embodiments is configured to perform the corresponding method provided above. Therefore, for beneficial effects that can be achieved, refer to the beneficial effects of the corresponding method provided above. Details are not described herein again.

A person of ordinary skill in the art may be aware that, with reference to examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A system, wherein the system comprises a first electronic device and a second electronic device;
the second electronic device is configured to hide and superimpose, on a plurality of frames of images displayed by the second electronic device, digital watermark information comprising device identification information of the second electronic device; and
the first electronic device is configured to: when detecting a first operation, obtain the plurality of frames of images through a camera;
determine the digital watermark information hidden in the plurality of frames of images; determine the device identification information of the second electronic device based on the digital watermark information; and
establish a connection relationship with the second electronic device based on the device identification information.

2. The system according to claim 1, wherein the first electronic device is specifically configured to:
determine key areas of the plurality of frames of images, wherein the key area is an area that is of the plurality of frames of images and whose texture complexity is greater than a first preset value; and
perform a decoding operation on the key areas of the plurality of frames of images, to obtain the digital watermark information.

3. The system according to claim 1 or 2, wherein the first electronic device is specifically configured to:
perform a decoding operation on two adjacent frames of images in the plurality of frames of images; and
superimpose operation results of a plurality of two adjacent frames of images, to obtain the digital watermark information.

4. The system according to claim 1, wherein the digital watermark information is superimposed on each of the plurality of frames of images, a ratio of a size of the digital watermark information to a size of the image is greater than a second preset value, and the first electronic device is specifically configured to:
perform a decoding operation on entire images of the plurality of frames of images, to obtain the digital watermark information.

5. A device connection method, wherein the method is applied to a first electronic device, and the method comprises:
detecting a first operation, and obtaining, through a camera, a plurality of frames of images displayed by a second electronic device, wherein digital watermark information is hidden in the plurality of frames of images, and the digital watermark information comprises device identification information of the second electronic device;
determining the digital watermark information hidden in the plurality of frames of images;
determining the device identification information of the second electronic device based on the digital watermark information; and
establishing a connection relationship with the second electronic device based on the device identification information.

6. The method according to claim 5, wherein determining the digital watermark information hidden in the plurality of frames of images comprises:
determining key areas of the plurality of frames of images, wherein the key area is an area that is of the plurality of frames of images and whose texture complexity is greater than a first preset value; and
determining the digital watermark information based on the key areas of the plurality of frames of images.

7. The method according to claim 6, wherein determining the digital watermark information based on the key areas of the plurality of frames of images comprises:
performing a decoding operation on the key areas of the plurality of frames of images, to obtain the digital watermark information.

8. The method according to claim 7, wherein performing the decoding operation on the key areas of the plurality of frames of images, to obtain the digital watermark information comprises:
performing a decoding operation on key areas of two adjacent frames of images in the plurality of frames of images, to obtain the digital watermark information.

9. The method according to claim 7, wherein performing the decoding operation on the key areas of the plurality of frames of images, to obtain the digital watermark information comprises:
performing a decoding operation on key areas of two adjacent frames of images in the plurality of frames of images; and
superimposing operation results of the key areas of a plurality of two adjacent frames of images, to obtain the digital watermark information.

10. The method according to claim 5, wherein the digital watermark information is superimposed on each of the plurality of frames of images, a ratio of a size of the digital watermark information to a size of the image is greater than a second preset value, and determining the digital watermark information hidden in the plurality of frames of images comprises:
performing a decoding operation on entire images of the plurality of frames of images, to obtain the digital watermark information.

11. The method according to claim 10, wherein performing the decoding operation on the entire images of the plurality of frames of images, to obtain the digital watermark information comprises:
performing a decoding operation on entire images of two adjacent frames of images in the plurality of frames of images, to obtain the digital watermark information.

12. The method according to claim 10, wherein performing the decoding operation on the entire images of the plurality of frames of images, to obtain the digital watermark information comprises:
performing a decoding operation on entire images of two adjacent frames of images in the plurality of frames of images; and
superimposing operation results of entire images of a plurality of two adjacent frames of images, to obtain the digital watermark information.

13. The method according to any one of claims 5 to 12, wherein the method further comprises:
sending first indication information to the second electronic device, wherein the first indication information indicates the second electronic device to stop superimposing the digital watermark information on the displayed image.

14. The method according to any one of claims 5 to 13, wherein the digital watermark information is a bar code; and the device identification information comprises at least one of a product serial number of the second electronic device, a medium access control MAC address of the second electronic device, or a numeric number mapped to the product serial number.

15. A device connection method, wherein the method is applied to a second electronic device, and the method comprises:
receiving second indication information sent by a first electronic device, wherein the second indication information indicates the second electronic device to superimpose device identification information on a displayed image; and
hiding and superimposing, on the displayed image based on the second indication information, digital watermark information comprising the device identification information of the second electronic device, wherein the digital watermark information is used to establish a connection relationship between the first electronic device and the second electronic device.

16. The method according to claim 15, wherein hiding and superimposing, on the displayed image based on the second indication information, the digital watermark information comprising the device identification information of the second electronic device comprises:
superimposing the digital watermark information on a key area of the image based on the second indication information, wherein the key area is an area that is of the image and whose texture complexity is greater than a first preset value.

17. The method according to claim 15, wherein hiding and superimposing, on the displayed image based on the second indication information, the digital watermark information comprising the device identification information of the second electronic device comprises:
superimposing the digital watermark information on an entire image of the image based on the second indication information, wherein a ratio of a size of the digital watermark information to a size of the image is greater than a second preset value.

18. The method according to any one of claims 15 to 17, wherein the method further comprises:
receiving first indication information sent by the first electronic device; and
stopping, based on the first indication information, hiding and superimposing the digital watermark information on the displayed image.

19. The method according to any one of claims 15 to 18, wherein the digital watermark information is a bar code; and the device identification information comprises at least one of a product serial number of the second electronic device, a medium access control MAC address of the second electronic device, or a numeric number mapped to the product serial number.

20. An electronic device, comprising one or more processors, and one or more memories, wherein the one or more memories store one or more programs, and when the one or more programs are executed by the one or more processors, the device connection method according to any one of claims 5 to 19 is performed.

21. A chip, wherein the chip comprises a processor and a communication interface, the communication interface is configured to: receive a signal, and transmit the signal to the processor, and the processor processes the signal, so that the device connection method according to any one of claims 5 to 19 is performed.

22. A readable storage medium, wherein the readable storage medium stores instructions, and when the instructions are run on an electronic device, the device connection method according to any one of claims 5 to 19 is performed.
